# EUROPÄISCHE PATENTSCHRIFT

(11) **EP 1 466 311 B1**
(45) Veröffentlichungstag und Bekanntmachung des Hinweises auf die Patenterteilung: **07.09.2005**
(21) Anmeldenummer: 02782624.7
(22) Anmeldetag: 19.12.2002
(51) Int. Cl.: G08G 1/015, G08G 1/04, G08G 1/017, G01S 17/66, G01S 17/89

(54) **VERFAHREN UND VORRICHTUNG ZUR VERFOLGUNG VON OBJEKTEN, INSBESONDERE ZUR VERKEHRSÜBERWACHUNG**
METHOD AND DEVICE FOR TRACKING OBJECTS, ESPECIALLY FOR MONITORING TRAFFIC
PROCEDE ET DISPOSITIF PERMETTANT DE SUIVRE DES OBJETS, EN PARTICULIER DE SURVEILLER LA CIRCULATION

(30) Priorität: 19.12.2001 CH 232601
(43) Veröffentlichungstag der Anmeldung: 13.10.2004
(73) Patentinhaber: Logobject AG, 8005 Zürich (CH)
(72) Erfinder: BREGA, Roberto, CH-8052 Zürich (CH); WULLSCHLEGER, Felix, H., CH-8045 Zürich (CH)
(74) Vertreter: Becker, Konrad
(86) Internationale Anmeldenummer: PCT/CH2002/000713
(87) Internationale Veröffentlichungsnummer: WO 2003/052715

(56) Entgegenhaltungen:
- EP-A- 0 741 377
- WO-A-97/50067
- US-A- 5 752 215

## Beschreibung

Die vorliegende Erfindung betrifft ein Verfahren zur Verfolgung von Objekten, insbesondere zur Verkehrsüberwachung gemäss Patentanspruch 1 und eine Vorrichtung zur Durchführung des Verfahrens gemäss Patentanspruch 16.

Die Sättigung der Verkehrssysteme in den Industrieländern und die Schwierigkeit diese Systeme zu erweitern sowie das gleichzeitige kontinuierliche Wachstum des Verkehrs erfordern, dass diese Systeme optimal genutzt werden. Dafür ist es notwendig, möglichst genau, 'in Echtzeit', die Verkehrsaufkommen messen zu können. Die Qualität eines Leitsystems hängt entscheidend von der Qualität und Aussagekraft der Daten ab: Je mehr Merkmale erfasst werden, desto mehr Möglichkeiten zur Modellierung der Prozesse ergeben sich. Das einfachste Merkmal ist das Vorhandensein eines Objektes. Weitere Merkmale sind z.B. die Grösse oder die Geschwindigkeit des Objektes. Die erwähnten Merkmale gehören zu einer Klasse von Merkmalen, welche durch eine geeignete Sensorik erfasst werden können. Diese Sensorik nutzt zur Messung ein physikalisches Gesetz oder auch mehrere, wie etwa bei der Ermittlung Geschwindigkeit durch Dopplereffekt.
Weitere, nicht trivial zu erfassende Merkmale, sind Typ des Objektes, Richtung des Objektes, Pfad des Objektes, Kollisionen mit anderen Objekten, Abstände zwischen nacheinander folgenden Objekten, Verhalten des Objektes, z.B. das Überschreiten von vordefinierten Bereichen.
Die heute eingesetzten Apparate beschränken sich fast ausschliesslich auf die Erfassung von einfacheren Merkmalen. Beispiele hierfür sind:
- Taxomex MARKSMAN-Erfassung von Fahrzeugsachsen mittels Pneumatik (http:// www.taxomex.ch/marksman_d.html; Taxomex AG, CH-8037 Zürich, Schweiz).
- Taxomex SPEEDY-Erfassung von Fahrzeuggeschwindigkeit (http://www.taxomex.ch/speedy_d.html; Taxomex AG, CH-8037 Zürich, Schweiz).
- Multanova RADAR-Erfassung von Fahrzeugsgeschwindigkeit mittels Dopplereffekt (Firmenprospekt, Multanova AG, CH-8612 Uster, Schweiz).
- Multanova MultaLaser-II-Erfassung von Fahrzeugsgeschwindigkeit mittels Lasertechnik (Firmenprospekt, Multanova AG, CH-8612 Uster, Schweiz).
- Jenoptik LOTOS-Erfassung von Verkehrsfluss und Geschwindigkeit mittels Lasertechnik (http://www.jenoptik-los.de/fasersensor/deutsch/traffic_monitoring/lotos.html; JENOPTIK Laser, Optik, Systeme Gmbh, Jena, Deutschland).
- Siemens TRAFFICEYE-Erfassung von Verkehrsfluss und Geschwindigkeit mittels Videokameras (Firmenprospekt, Siemens AG, D-81359 München, Deutschland).
- SICK TCS 2000-Erfassung von Verkehrsfluss, Geschwindigkeit und Klassifizierung von Objekten mittels kombiniertem Dopplereffekt und Lasertechnik (Produkt-Information, Sick AG, D-79276 Reute, Deutschland).

Nachteilig an den bekannten Systemen ist die Tatsache, dass sie nur ein oder wenige Merkmale messen und in keinem Fall gleichzeitig komplexere Verhalten von Objekten eruieren. Hinzu kommt, dass mit diesen Apparaten nur genaue Resultate erfasst werden können, wenn komplexe Eichungsprozesse durchgeführt werden, welche jedoch für den mobilen Einsatz nicht geeignet sind.

Aufgabe der vorliegenden Erfindung ist es, ein Verfahren zur Verfolgung von Objekten insbesondere zur Verkehrsüberwachung, zu realisieren.
Eine weitere Aufgabe besteht darin, eine Vorrichtung zur Durchführung des Verfahrens anzugeben.

Die Aufgabe wird gelöst durch ein Verfahren gemäss Patenanspruch 1 und durch eine Vorrichtung gemäss Patenanspruch 16. Bei diesem Verfahren werden Daten in Echtzeit ausgewertet, nachdem sie von einem oder mehreren horizontal flächendeckenden radial-metrischen Sensor (z.B. Laser Range Finder) erfasst werden.

Das Verfahren und die dazugehörige Vorrichtung werden im Folgenden beschrieben.

Es zeigen:
- Fig. 1: Schematische Darstellung der Vorrichtungsanordnung
- Fig. 2: Voraussetzung für die Sensorebene
- Fig. 3: 'In the Loop'-Konfiguration
- Fig. 4: Extraktion von Objekten aus den Rohdaten
- Fig. 5: Zuordnung erfasster Objekte zu bekannten Objekten
- Fig. 6: Ermittlung objektbezogener Parameter
- Fig. 7: Ausführungsbeispiel mit 'Virtueller Induktionsschleife'

Das erfindungsgemässe Verfahren wird im Folgenden an Hand einer Verkehrsüberwachung erläutert, wobei dies nur eine exemplarische Auswertmöglichkeit der erfassten Daten darstellt. Das vorgestellte Verfahren dient als Basis für eine grosse Anzahl weiterer Anwendungen, welche sich durch die Qualität und Vielfältigkeit der extrahierten Merkmale einfach realisieren lassen.

In der vorliegenden Erfindung werden folgende Begriffe definiert:
LIDAR (Light Detection and Ranging): Sensorprinzip basierend auf einem Laserimpuls, der ausgesendet wird und dessen Reflektion auf einem Hindernis bezüglich Intensität und Dauer des Fluges gemessen wird. Aus dieser Information wird die Distanz ermittelt. Zusätzlich können stark-reflektierende Gegenstände (Reflektoren) eindeutig identifiziert werden.
Rohdaten: Die nicht verarbeiteten, vom Sensor gelieferten Daten.
In the Loop: Betriebsart, in der die gleiche Sensorik sowohl für die Konfiguration als auch für den eigentlichen Betrieb benutzt wird.
Objekt: Lebewesen und Fahrzeuge, welche sich im Arbeitsbereich des Sensors aufhalten.
Objektdaten: Eine Menge von Messpunkten, die von einem Objekt generiert wurde.
Objektdarstellung: Rechnerische Darstellung des Objektes.
Szene: Beschreibung aller Objekte im Arbeitsbereich zu einem gegebenen Zeitpunkt.
Cluster: Anhäufung gleicher Entitäten, bzw. Messpunkte, welche als zusammengehörig angesehen werden.
Virtuelle Induktionsschleife: Der wirklichen Induktionsschleife, basierend auf Induktionsänderung in Anwesenheit von metallischen Gegenständen, nachempfundene virtuelle Linie, welche auf obengenannte Objekte reagiert.

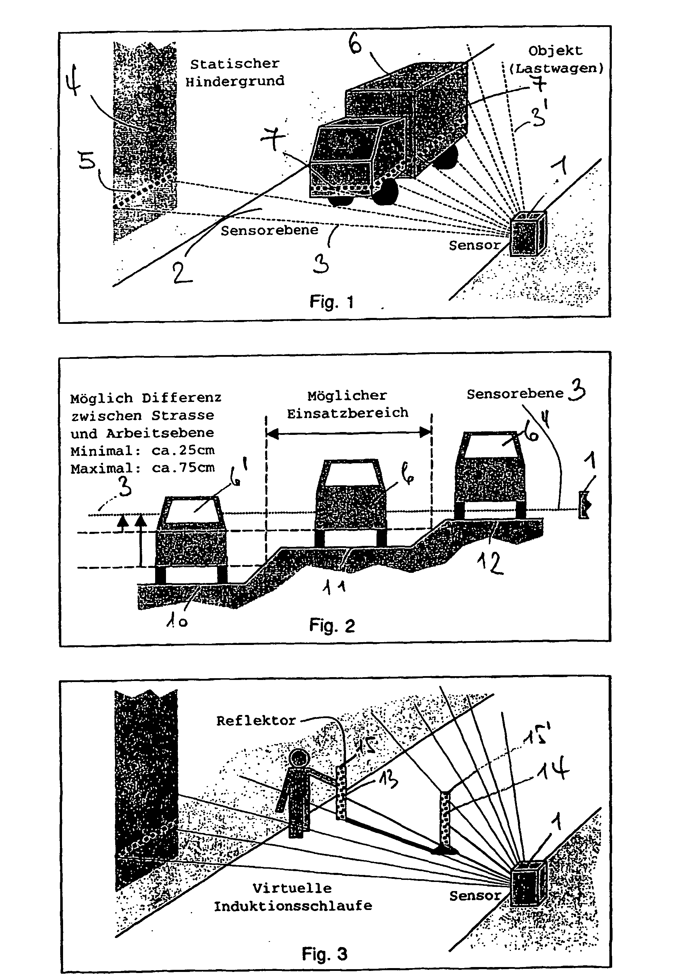

Fig. 1 zeigt eine schematische Darstellung der erfindungsgemässen Vorrichtungsanordnung. Ein radial in einer Sensorebene 2 arbeitender Sensor 1 ist am Rand einer Strasse installiert und weist einen fächerartigen Arbeitsbereich auf, der von Linien 3, 3' des Sensors begrenzt wird. Der Arbeitsbereich wird auf der gegenüber liegenden Strassenseite durch Gebäude, Gartenmauer, Bäume und dergleichen begrenzt, die gesamthaft einen statischen Hintergrund 4 bilden. Dieser statische Hintergrund 4 wird vom Sensor 1 über eine Vielzahl von Messpunkten 5 metrisch erfasst. Ein auf der Strasse sich frei bewegendes Objekt 6, z.B. ein Lastwagen, wird im Arbeitsbereich des Sensors über eine Vielzahl von Messpunkten 7 ebenfalls metrisch erfasst.

Nachstehend werden zuerst die notwendigen Voraussetzungen zur Installation der Vorrichtung aufgelistet:
Es wird vorausgesetzt, dass die zu überwachende Zone genügend eben ist. D.h. durch diese Zone muss sich eine Ebene, bzw. die Sensorebene, legen lassen, von welcher der Strassenbelag, vertikal gemessen, mindestens 25 cm, aber höchstens 75 cm, entfernt ist.
Fig. 2 veranschaulicht die Voraussetzungen für die Sensorebene, bzw. Arbeitsebene. Auf einer Strasse mit drei gegeneinander in der Höhe versetzten Fahrbahnen 10, 11, 12 befinden sich die Fahrzeuge 6, 6', 6". Erkennbar ist der am Strassenrand installierte Sensor 1 mit der Sensorebene 3. Diese trifft das Fahrzeug 6" auf der Höhe der Radnabe und das Fahrzeug 6' auf Fensterhöhe. Für beide Fahrzeuge 6', 6" liegt die Sensorebene 3 ungünstig, d.h. ausserhalb des möglichen Einsatzbereiches. Für das Fahrzeug 6 liegt die Sensorebene 3 innerhalb des möglichen Einsatzbereiches.
Im Weiteren wird vorausgesetzt, dass die Sensorebene 3 von der Sensor-Position im Grossen und Ganzen sichtbar ist. Sind die zu verfolgenden Objekte für kurze Zeit durch eigene Bewegungen oder die Bewegungen anderer Objekte verdeckt, so hat dies nicht das Versagen der Methode zur Folge, sondern es zeigt sich eine 'Graceful Degradation' des Verfahrens. D.h. die zunehmend häufigere Abdeckung von Objekten hat lediglich eine abnehmende Datenqualität zur Folge.

### Verfahren.

Der Einsatz der erfindungsgemässen Vorrichtung kann in drei grundsätzliche Funktionen unterteilt werden: Erstens die Konfiguration, zweitens den Betrieb und drittens den Datenaustausch.

### 1. Konfiguration

Nach der mechanischen Installation, welche je nach Anwendung sehr variieren kann, erfolgt die Konfiguration. Die Konfiguration dient dazu, das Arbeitsgebiet, bzw. den Arbeitsbereich der Vorrichtung zu definieren sowie die anwendungsspezifischen Applikationen zu konfigurieren, bzw. zu parametrisieren. Anwendungsspezifische Applikationen sind z.B. das Zählen von Objekten, das Überprüfen des Verhaltens von Objekten usw..

Topologische Parameter werden durch vom Sensor eindeutig erkennbare Markierungen, welche einfach und intuitiv aufgestellt werden können, eingegeben.

Fig. 3 zeigt eine 'In the Loop'-Konfiguration. Beispielsweise wird eine sog. 'virtuelle Induktionsschleife' durch setzen von zwei Markern 13, 14, die eine linke und eine rechte Begrenzung definieren, eingegeben. Die zwei Marker 13, 14 können bei einem laserbasierten Sensorsystem 1 mit optischen Reflektoren 15, 15' realisiert werden. Nach erfolgter Eingabe der Markerpositionen, können diese wieder entfernt werden.

### 2. Betrieb

Die folgende Auflistung wiederspiegelt auch die in Echtzeit erfolgte, serialisierte Datenverarbeitung. Dabei sind drei Hauptblöcke zu identifizieren: Datenakquisition (Schritt 1), Tracking (Schritt 2-5) und Anwendungen (Schritt 6).

Schritt 1: Mit einem radial in einer Ebene arbeitenden Sensor werden Messpunkte metrisch erfasst, welche die Rohdaten bilden. Diese Ebene wird im Wesentlichen horizontal angelegt und erfüllt des Weiteren die als 'Voraussetzungen' definierten Bedingungen. Sie braucht nicht exakt horizontiert zu werden und lässt kleinere Abweichungen von der Horizontalen bis etwa 10 Grad ohne weiteres zu. Beispiele solcher Sensoren sind LIDAR, welche über das 'Time of Flight'-Prinzip die Distanzen ermitteln. Die Rohdaten werden kontinuierlich erfasst und über eine Schnittstelle des Sensors einer Recheneinheit zugeführt, wo sie zur weiteren Verarbeitung zur Verfügung stehen.

Schritt 2: Die Recheneinheit bestimmt selbstständig und kontinuierlich durch statistische Methoden die statischen Hindernisse und verwendet diese als Referenz.
Mit den statischen Hindernissen ist der gesamte Hintergrund gemeint, so z.B. auf einer Strasse die angereihten Gebäude mit ihren Konturen, Garteneinfriedungen, Bäume, aber auch parkierte Fahrzeuge jeglicher Art. Weicht ein Messpunkt von dieser Referenz ab, so wird er zur weiteren Auswertung gekennzeichnet und so im Sinne einer Datenreduktion von der Datenmenge des Hintergrundes selektiert.
Der Hintergrund selber kann sich zeitlich verändern, d.h. es wird z.B. ein Tor geöffnet oder ein Fahrzeug im Arbeitsbereich des Sensors parkiert. Diese langsamen Veränderungen im Vergleich zu jenen der zu verfolgenden Objekte werden in der Hintergrundsinformation verarbeitet, was mit 'Anpassen', bzw. 'Aufdatieren' des Hintergrundes bezeichnet wird. Den Abschluss des Schrittes 2 bildet ein aufdatierter Hintergrund und eine Menge von Messpunkten, die als 'Objektdaten' bezeichnet werden. Sowohl der aufdatierte Hintergrund wie die Objektdaten stehen in der Recheneinheit zur weiteren Verarbeitung zur Verfügung (siehe Fig. 1).

Schritt 3: Die zur Weiterauswertung gekennzeichneten Messpunkte, bzw. Objektmesspunkte oder Objektdaten werden einem oder mehreren Clustern zugeordnet. Damit erfolgt eine Zuordnung der Objektmesspunkte zu Objekten. Clustering erfolgt durch bekannte Algorithmen, z. B. 'Kleinster geometrischer Abstand', 'Minimal Spanning Tree', 'C-Means', usw. (Michael P. Windham, Cluster Validity for the Fuzzy C-means Clustering Algorithm, TPAMI, 4(4), 357-363, July 1982).
Der Cluster-Zuordnungsschritt dient, a) die Datenmesspunkte als abstrakte Objekte zu betrachten, und b) eine Datenreduktion zu bewirken. Diese reduzierte Datenmenge wird in Schritt 4 weiter benutzt.

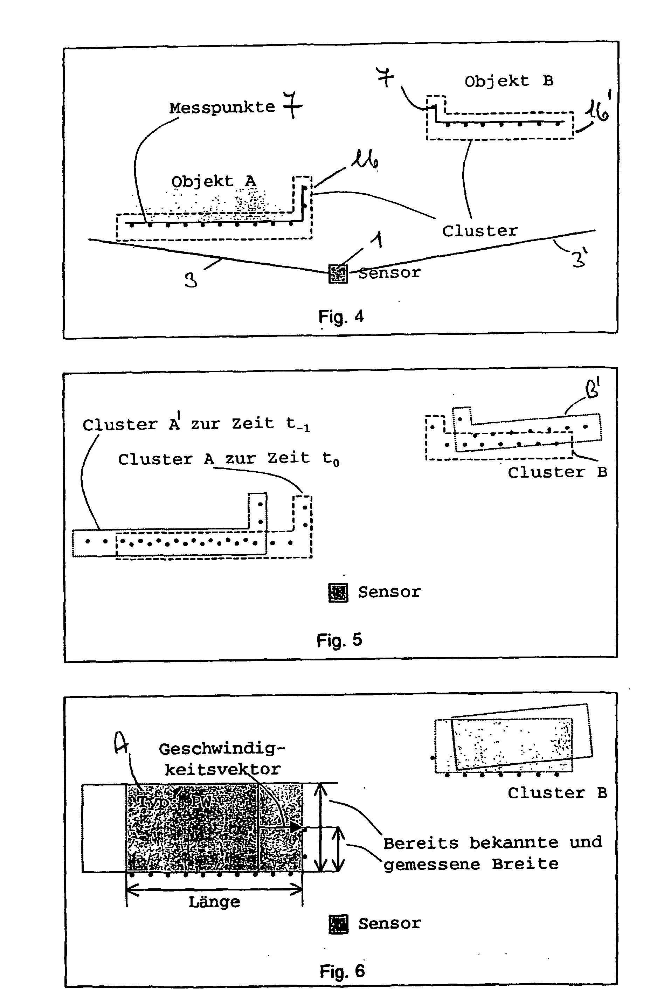

Fig. 4 zeigt die Extraktion von Objekten aus den Rohdaten in einer Draufsicht der Vorrichtungsanordnung. Erkennbar ist der Sensor 1 mit den Linien 3, 3', die den Fächerartigen Arbeitsbereich begrenzen. Die Objektmesspunkte 7 oder Objektdaten werden hier den zwei Clustern 16, 16' zugeordnet, denen die Objekte A und B zugehören.

Schritt 4: Die in der aktuellen Szene gefundenen Clusters werden in den vergangenen Szenen gesucht und optimal zugeordnet, bzw. mit diesen korreliert. Optimalität bezieht sich nicht nur auf die Position eines Objektes, sondern auch auf Typ und Merkmal aller Objekte, und zwar anwendungsspezifisch. Beispiele für Algorithmen sind 'Minimal Spanning Tree', 'Feature Point Tracking', usw. (Yaakov Bar-Shalom, Xiao-Rong Li, Estimation and Tracking: Principles, Techniques and Software, Artech House, 1983; Donald B. Reid, An Algorithm for Tracking Multiple Targets, IEEE Transactions on Automatic Control, 24(6), December 1979).
Ist ein im bisherigen Kontext vorhandenes Objekt in der aktuellen Szene nicht mehr auffindbar, so wird es, basierend auf der bekannten, bereits ermittelten Trajektorie, spekulativ bis zu einer vorgegebenen Unsicherheitsschwelle weiterverfolgt, d.h. die Trajektorie wird extrapoliert. Spekulatives Verfolgen geschieht unter Anwendung bekannter stochastischer Methoden, z.B. Kalmanfilter, 'Condensation Filter' (Mohinder S. Grewal, Angus P. Andrews, Kalman Filtering: Theory and Practice, Prentice-Hall, 1983). Den Abschluss des Schrittes 4 bildet eine Menge von Objekten, bzw. Objektdarstellungen, mit Charakteristiken und Merkmalen in Form eines weiter reduzierten Datensatzes.

Fig. 5 zeigt die Zuordnung erfasster Objekte zu bekannten Objekten in einer Draufsicht. Zur Zeit t₀ wurde ein Cluster A während in der Vergangenheit, d.h. zur Zeit t₋₁ der Cluster A' als Cluster A wiedererkannt werden kann. Der einzige erkennbare Unterschied nach der Zuordnung ist die translatorische Versetzung des Objektes, woraus die Bewegung abgeleitet und die Trajektorie des Objektes ermittelt werden kann. Ein Gleiches gilt für den Cluster B und B'. Bei der Zuordnung wird der Cluster B' als Cluster B wiedererkannt und danach die Trajektorie für das Objekt B ermittelt.

Schritt 5: Für alle im Kontext, bzw. in der Szene vorhandenen Objekte werden nun die entsprechenden Parameter aufdatiert. Bei sichtbaren Objekten werden zusätzliche Parameter wie z.B. Typ, Geschwindigkeit und Richtung berechnet sowie weitere typabhängige geometrische Informationen, wie z.B. Länge oder Breite von Fahrzeugen. Bei nicht sichtbaren, spekulativ verfolgten Objekten werden lediglich die Unsicherheitsmetriken aufdatiert. Die so nun vorliegenden Objekte, bzw. Objektdarstellungen, werden in einer Objektdatenbank in der Recheneinheit zusammengefasst und stehen für eine Reihe von Anwendungen zur Verfügung, bzw. zur Introspektion.

Fig. 6 zeigt die Ermittlung objektbezogener Parameter. Dem Objekt A kann im Weiteren der Typ PW mit Länge und Breite, sowie ein Geschwindigkeitsvektor zugeordnet werden. Dies erlaubt eine Klassifizierung von Verkehrsobjekten.

Schritt 6: Mögliche Anwendungen, bzw. Applikationen basieren auf der so zur Verfügung gestellten Objektdatenbank, welche den aktuellen Zustand aller Objekte in der Szene sowie deren Korrelationen in der Vergangenheit enthält. Als Beispiel diene das Messen des Verkehrsflusses. In diesem Fall braucht lediglich eine 'virtuelle Induktionsschleife' definiert zu werden, bei deren Überschreiten ein Zähler aktiv wird.

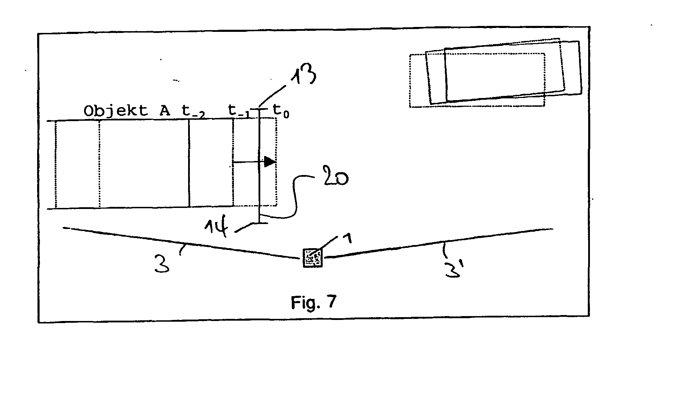

Fig. 7 zeigt ein Ausführungsbeispiel mit 'Virtueller Induktionsschleife'. Erkennbar sind der Sensor 1 mit den begrenzenden Linien 3, 3' seines fächerartigen Arbeitsbereiches. Ein Objekt A ist mit seinen Positionen zu den Zeiten t₀, t₋₁ und t₋₂ dargestellt. Eine 'Virtueller Induktionsschleife' 20, erstellt mit den Markern 13, 14, wurde vom Objekt A zwischen den Zeiten t₀ und t₋₁ durchquert.
Eine derartige Vorrichtungsanordnung eignet sich, um Überwachungs- und Triggerfunktionen zu realisieren. Auf diese Weise lassen sich der Verkehrsfluss messen und mit der bereits ermittelten Geschwindigkeit vervollständigen.

### 3. Datenaustausch

Die von den verschiedenen Applikationen (Betrieb, Schritt 6) ermittelten Daten können kontinuierlich oder offline im Batch-Modus zur Weiterverarbeitung zur Verfügung gestellt werden. Daten die kontinuierlich übermittelt werden, können zur lokalen Verkehrskontrolle dienen, zum Beispiel für eine flussgesteuerte Lichtsignalanlage oder als Auslöser für die Aufnahme einer Bild- oder Video-Kamera-Sequenz. Daten die im Batch-Modus übermittelt werden, können benutzt werden um z.B. eine globale Verkehrsplanung durchzuführen. Live-Daten können kontinuierlich über Draht oder drahtlos übermittelt werden. Erfasste, für den Batch-Modus vorgesehene Daten werden auf einem Massenspeicher in der Recheneinheit gesichert und können über Draht, drahtlos oder durch physikalischen Transport des Massenspeichers ausgetauscht werden.

### Weitere Anwendungen

Das Verfahren eignet sich zur Erfassung, bzw. Erkennung einer Vielzahl von Verkehrsübertretungen, nämlich all jene, die nicht statischer Natur sind, sondern sich nur aus der Analyse der Objektverfolgung erkennen lassen. Damit ist die Basis für eine anschliessende Ahndung von Verkehrsübertretungen gegeben. Als Verkehrsübertretungen kommen etwa in Frage das Überfahren einer Lichtsignalanlage, Übertretungen bei Stop-Linien und bei Sicherheitslinien und die Vortrittsmissachtung von Fussgängern bei Fussgängerstreifen. Im Weiteren besteht die Möglichkeit, dass Verkehrsflussstörungen, z.B. Kollisionen, erkannt werden und auf Grund dervorliegenden Daten die Massnahmen zur Dokumentation (Photos) aktiviert werden.

Im folgenden wird als weiteres Beispiel eine Anwendung beschrieben, welche nicht für den Strassenverkehrssektor, sondern für den Bereich Sicherheitstechnik vorgesehen ist. Es geht um die automatische und optimale Führung von einer oder mehreren Überwachungskameras, gesteuert von einem Leitsystem, welches einen oder mehrere der hier erwähnten Vorrichtungen benutzt. Optimal in diesem Kontext bedeutet, die am nahesten zum Objekt sich befindende Kamera auszurichten, gegebenenfalls Visibilität und Bewegungsrichtungen der Objekte auszunutzen, um die aussagekräftigsten Kameraeinstellungen (Winkel, Zooming) zu erzielen.
Um dies zu erreichen braucht lediglich die oben unter 'Betrieb', Schritt 6, erwähnte Applikation implementiert zu werden. Über einen Datenaustausch werden dann diese Daten dem Leitsystem zugeführt. Das Leitsystem ordnet verfügbare Kameras den Objekten zu oder rotiert deren Überwachungsobjekte (in einer 1:1, 1:n, n:1 Anordnung). Dieses System verbessert die Qualität einer Videodatenerfassung deutlich und senkt die Betriebskosten.

Generell können mit den zur Verfügung stehenden Objektdarstellungen alleine oder in Zusammenwirkung mit einem Leitsystem Überwachungsmechanismen, wie Kameras, oder Alarmsysteme, gesteuert werden. Alleine oder in Zusammenwirkung mit einem Leitsystem können Sicherheitsmechanismen, wie automatische Türen, gesteuert werden.
Das Verfahren lässt sich mit dem Vorliegen der beschriebenen Objekte einfach in Verkehrsregelungen implementieren.

## Patentansprüche

1. Verfahren zur Verfolgung von Objekten, insbesondere zur Verkehrsüberwachung, mittels eines flächenüberwachenden Sensors, **dadurch gekennzeichnet**,
a) dass ein im Wesentlichen horizontal radial-messender Sensor (1) metrische Daten von frei sich bewegenden Objekten (6) in einem Arbeitsbereich des Sensors Messpunkte (7) als Rohdaten erfasst und einer Recheneinheit zuführt,
b) dass die Rohdaten in der Recheneinheit in Echtzeit unter Anpassung des Hintergrundes zu Objektdaten verarbeitet werden,
c) dass die Objektdaten einem oder mehreren Clustern zugeordnet werden und eine reduzierte Datenmenge gebildet wird,
d) dass aus der reduzierten Datenmenge Objektdarstellungen mit einem reduzierten Datensatz gebildet werden, und
e) dass die Objekte (6) verfolgt und aus dem reduzierten Datensatz deren geometrische Eigenschaften ermittelt werden.

2. Verfahren nach Anspruch 1, **dadurch gekennzeichnet, dass** ein statischer Hintergrund (4) autonom erkannt und bei Änderungen angepasst, bzw. aufdatiert wird.

3. Verfahren nach Anspruch 1 oder 2, **dadurch gekennzeichnet, dass** Objekte (6) in der aktuellen Szene verfolgt und dabei aktuelle Parameter ermittelt werden und mit den Parametern der Objekte (6) der vergangenen Szenen korreliert werden.

4. Verfahren nach einem der Ansprüche 1 - 3, **dadurch gekennzeichnet, dass** in der aktuellen Szene nicht mehr auffindbare Objekte (6), basierend auf der bekannten, bereits ermittelten Trajektorie, spekulativ bis zu einer vorgegebenen Unsicherheitsschwelle weiterverfolgt werden.

5. Verfahren nach Anspruch 3 oder 4, **dadurch gekennzeichnet, dass** die Parameter der verfolgten Objekte (6) von aktuellen und vergangenen Szenen zur Introspektion zur Verfügung gestellt werden.

6. Verfahren nach einem der Ansprüche 1 - 5, **dadurch gekennzeichnet, dass** ein einfaches und intuitives 'In the Loop'-Konfiguration zur Verfügung gestellt wird, wobei die gleiche Sensorik für die Konfiguration, bzw. Parametrisierung und für den Betrieb verwendet wird.

7. Verfahren nach einem der Ansprüche 1 - 6, **dadurch gekennzeichnet, dass** virtuelle Induktionsschleifen (20) definiert, bzw. festgelegt werden, um Überwachungs- und Triggerfunktionen zu realisieren.

8. Verfahren nach einem der Ansprüche 1 - 7, **dadurch gekennzeichnet, dass** der Verkehrsfluss und/oder die Geschwindigkeit gemessen werden.

9. Verfahren nach einem der Ansprüche 1 - 8, **dadurch gekennzeichnet, dass** Verkehrsobjekte klassifiziert werden.

10. Verfahren nach einem der Ansprüche 1 - 9, **dadurch gekennzeichnet, dass** alle Verkehrsübertretungen, welche nicht statischer Natur sind, sondern sich nur aus der Analyse der Objektverfolgung erkennen lassen, erkannt und dokumentiert werden.

11. Verfahren nach Anspruch 10, **dadurch gekennzeichnet, dass** Verkehrsübertretungen das Überfahren einer Lichtsignalanlage, Übertretungen bei Stop-Linien und bei Sicherheitslinien und Vortrittsmissachtung von Fussgängern bei Fussgängerstreifen sind.

12. Verfahren nach Anspruch 10, **dadurch gekennzeichnet, dass** Verkehrsflussstörungen, z.B. Kollisionen, erkannt werden und auf Grund der vorliegenden Daten die Massnahmen zur Dokumentation (Photos) aktiviert werden.

13. Verfahren nach einem der Ansprüche 1 - 12, **dadurch gekennzeichnet, dass** mit den zur Verfügung stehenden Objektdarstellungen alleine oder in Zusammenwirkung mit einem Leitsystem Übennrachungsmechanismen, wie Kameras, oder Alarmsysteme, gesteuert werden.

14. Verfahren nach einem der Ansprüche 1 - 12, **dadurch gekennzeichnet, dass** mit den zur Verfügung stehenden Objektdarstellungen alleine oder in Zusammenwirkung mit einem Leitsystem Sicherheitsmechanismen, wie automatische Türen, gesteuert werden.

15. Verfahren nach einem der Ansprüche 1 - 12, **dadurch gekennzeichnet, dass** mit den zur Verfügung stehenden Objektdarstellungen Verkehrsregelungen implementiert werden.

16. Vorrichtung zur Durchführung des Verfahrens nach einem der Ansprüche 1 - 15, **dadurch gekennzeichnet, dass** ein im Wesentlichen horizontal radial-messender, flächenüberwachender Sensor (1) zur Erfassung in Echtzeit von metrischen Daten von frei sich in einem Arbeitsbereich des Sensors bewegenden Objekten (6) vorgesehen ist, der über eine Schnittstelle mit einer Recheneinheit verbunden ist, dass die Recheneinheit mit einer Software ausgerüstet ist und dass diese Software zur Berechnung von Objektdarstellungen aus den Rohdaten des Sensors zur Verfügung steht.

17. Vorrichtung nach Anspruch 16, **dadurch gekennzeichnet, dass** der Sensor (1) so installiert vorliegt, dass dessen Sensorebene (3) zur Strasse minimal 25 cm und maximal 75 cm beträgt.

18. Vorrichtung nach Anspruch 16 oder 17, **dadurch gekennzeichnet, dass** die Berechnung der Objektdarstellungen online und offline erfolgt.

## Claims

1. Process for the pursuit of objects, in particular for purposes of traffic surveillance, by means of an area-monitoring sensor, wherein
a) an essentially horizontal radially-measuring sensor (1) records metrical data of freely moving objects (6) in a working area of the sensor (measurement points (7)) as raw data and transmits said data to a processor unit,
b) the raw data in the processor unit are processed in real time, with adaptation of the background to object data,
c) the object data are allocated to one or more clusters, and that a reduced quantity of data is formed,
d) from the reduced quantity of data object representations are formed with a reduced data record, and
e) the objects (6) are pursued and from the reduced data record their geometric characteristics are determined.

2. Process as claimed in claim 1, wherein a static background (4) is autonomously recorded and revised or updated in the case of changes.

3. Process as claimed in any one of claims 1 or 2, wherein objects in the current scene are being pursued, during process current parameters are recorded and correlated with the parameters of the objects (6) of the past scene.

4. Process according to any one of claims 1 - 3, wherein in the current scene objects (6) which can no longer be found in the current scene are pursued speculatively up to a pre-defined unsurety threshold, based on the known, already established trajectory.

5. Process as claimed in any one of claims 3 or 4, wherein the parameters of the pursued objects (6) are made available from current and past scenes for purposes of introspection.

6. Process as claimed in any one of claims 1 - 5, wherein a simple and intuitive 'in-the-loop' configuration is made available, the same sensing technique being used for the configuration or parameterization and for operation.

7. Process as claimed in any one of claims 1 - 6, wherein virtual induction loops (20) are defined or stipulated for the realization of monitoring and triggering functions.

8. Process as claimed in any one of claims 1 - 7, wherein the flow of traffic and/or the speed is measured.

9. Process as claimed in any one of claims 1 - 8, wherein traffic objects are classified.

10. Process as claimed in any one of claims 1 - 9, wherein all traffic violations which are not of static nature, but which can only be discerned by an analysis of the object pursuit, are identified and documented.

11. Process as claimed in claim 10, wherein traffic violations consist of running red lights, violations at stop and no-crossing lines and failure to yield the right of way to pedestrians at pedestrian crossings.

12. Process as claimed in claim 10, wherein disruptions in the traffic flow, e.g. collisions, are identified and on the basis of the existing data the documentation measures (photos) are activated.

13. Process as claimed in any one of claims 1 - 12, wherein with the available object representations alone or in conjunction with a control system surveillance mechanisms such as cameras or alarm systems are controlled.

14. Process as claimed in any one of claims 1 - 12, wherein with the object representations alone or in conjunction with a control system safety mechanisms such as automatic doors can be controlled.

15. Process as claimed in any one of claims 1 - 12, wherein with the available object representations traffic rules are implemented.

16. Device for conducting the process as claimed in any one of claims 1 - 15, wherein an essentially horizontal radially measuring area-monitoring sensor (1) for the real-time measurement of metrical data of objects (6) which are freely moving in a working area of the sensor is installed which is connected with a processor unit via an interface, wherein the processor unit is furnished with a software, and wherein this software is available for the calculation of object representations from the raw data of the sensor.

17. Device as claimed in claim 16, wherein the sensor (1) is installed in a condition such that its sensor plane (3) toward the street is a minimum of 25 cm and a maximum of 75 cm.

18. Device as claimed in claim 16 or 17, wherein object representations are calculated online and offline.

## Revendications

1. Procédé destiné à suivre des objets, en particulier pour la surveillance de la circulation, au moyen d'un capteur de surveillance de surface, **caractérisé par** le fait
a) qu'un capteur de mesure radiale (1) essentiellement horizontale saisit des données métriques d'objets (6) se déplaçant librement dans une zone de travail du capteur (points de mesure (7)) comme données brutes pour les transmettre à une unité centrale,
b) que les données brutes sont transformées dans l'unité centrale en temps réel, après adaptation du fond, en données d'objets,
c) que les données d'objets sont attribuées à un ou plusieurs clusters afin de générer une quantité de données réduite,
d) que des représentations d'objets avec un jeu de données réduit sont générées à partir de la quantité de données réduite, et
e) que les objets (6) sont suivis et que le jeu de données réduit permet de déterminer leurs propriétés géométriques.

2. Procédé selon la revendication 1, **caractérisé en ce qu'**un fond statique (4) est reconnu de manière autonome et, en cas de modifications, adapté ou mis à jour.

3. Procédé selon la revendication 1 ou 2, **caractérisé en ce que** des objets (6) sont suivis dans la scène actuelle et que des paramètres actuels sont calculés et mis en corrélation avec les paramètres des objets (6) des scènes précédentes.

4. Procédé selon une des revendications 1 - 3, **caractérisé en ce que** des objets (6), qu'il n'est plus possible de trouver dans la scène actuelle, continuent d'être suivis, sur la base de la trajectoire connue déjà calculée, de manière spéculative jusqu'à un seuil d'incertitude prédéfini.

5. Procédé selon la revendication 3 ou 4, **caractérisé en ce que** les paramètres des objets suivis (6) des scènes actuelles et précédentes sont mis à disposition pour l'introspection.

6. Procédé selon une des revendications 1 - 5, **caractérisé en ce qu'**une configuration «In the Loop» simple et intuitive est mise à disposition, les mêmes capteurs étant utilisés pour la configuration ou le paramétrage et pour le fonctionnement.

7. Procédé selon une des revendications 1 - 6, **caractérisé en ce que** des boucles d'induction virtuelles (20) sont définies ou déterminées pour réaliser des fonctions de surveillance et de trigger.

8. Procédé selon une des revendications 1 - 7, **caractérisé en ce que** le flux de circulation et/ou la vitesse sont mesurés.

9. Procédé selon une des revendications 1 - 8, **caractérisé en ce que** des objets de circulation sont classifiés.

10. Procédé selon une des revendications 1 - 9, **caractérisé en ce que** toutes les infractions au code la route, qui ne sont pas de nature statique, mais qui se laissent reconnaître, sont reconnues et documentées uniquement grâce à l'analyse du suivi des objets.

11. Procédé selon la revendication 10, **caractérisé en ce que** les infractions au code la route sont le non-respect d'un feu de signalisation, le franchissement d'un stop et d'une ligne de sécurité et le non-respect de la priorité des piétons sur les passages pour piétons.

12. Procédé selon la revendication 10, **caractérisé en ce que** les perturbations du flux de circulation, telles que les collisions, sont reconnues et qu'à partir des données disponibles les mesures pour la documentation (photos) sont mises en oeuvre.

13. Procédé selon une des revendications 1 - 12, **caractérisé en ce que** les représentations d'objets mises à disposition, utilisées seules ou conjointement avec un système de commande, permettent de commander des mécanismes de surveillance, tels que des caméras ou des systèmes d'alarme.

14. Procédé selon une des revendications 1 - 12, **caractérisé en ce que** les représentations d'objets mises à disposition, utilisées seules ou conjointement avec un système de commande, permettent de commander des mécanismes de sécurité, tels que des portes automatiques.

15. Procédé selon une des revendications 1 - 12, **caractérisé en ce que** les représentations d'objets mises à disposition permettent d'implémenter des règles de circulation.

16. Dispositif destiné à exécuter le procédé selon une des revendications 1 - 15, **caractérisé en ce qu'**un capteur (1) de mesure radiale essentiellement horizontale destiné à la surveillance de surface est prévu pour la saisie en temps réel de données métriques d'objets (6) se déplaçant librement dans une zone de travail du capteur qui est connecté via une interface à une unité centrale, que l'unité centrale est équipée d'un logiciel et que ce logiciel est mis à disposition pour le calcul des représentations d'objets à partir des données brutes du capteur.

17. Dispositif selon la revendication 16, **caractérisé en ce que** le niveau (3) du capteur (1) est surélevé d'au moins de 25 cm et d'au plus de 75 cm par rapport à la voie de circulation.

18. Dispositif selon la revendication 16 ou 17, **caractérisé en ce que** le calcul des représentation d'objets s'effectue en ligne et hors connexion.
